# EUROPEAN PATENT APPLICATION

(11) **EP 2 818 833 A2**
(43) Date of publication of application: **31.12.2014**
(21) Application number: 14171893.2
(22) Date of filing: 11.06.2014
(51) Int. Cl.: G01C 21/36

(54) **A method to display a Point-of-Interest (POI) to a user and a device thereof**

(30) Priority: 26.06.2013 IN CH28012013
(71) Applicant: ROBERT BOSCH GMBH, 70442 Stuttgart (DE); Robert Bosch Engineering And Business Solutions Limited, Bangalore 560 095 State of Karnataka (IN)
(72) Inventor: Arunkumar, Sreeja, 635109 Onnalvadi, Karappalli, Hosur, TamilNadu (IN)

(57) **Abstract**

A method to display Point-of-Interest (POI) (11) to a user (50) in a navigation device (100) is disclosed. The method comprises the steps of displaying the POI (11) in a limited information state (111), receiving a input from the user (50) depending on the limited information state (111) of the POI (11), retrieving a detailed information state (112) of the POI (11) from a database (30) depending on the input received from the user (50) and displaying the detailed information state (112) of the POI (11).

## Description

### Field of the invention

The current invention relates to a method and a device to display a Point-of-Interest (POI) in a navigation device, to a user of the navigation device.

### Background of the invention

Navigation devices are well known in current technology that they help a user to traverse from an origin to a destination location. Navigation devices are available in vehicles, handheld mobiles or other handheld gadgets and they help the user in navigating from the origin to the destination by displaying the path between the two locations. Further, with the advancement in the technology, the navigation devices also display specific points along the path (POI - Point of Interest), between the origin location and the destination location, which might be of interest to the user. These POIs typically could be a hospital, or a fuel station or a shopping mall etc. The POIs pop up in a display unit of the navigation device, as and when the user traverses through the path from the origin location to the destination location.

In the current navigation devices the POI can be associated with additional information as well. For example, an opening or closing time of a restaurant POI could be displayed along with the POI. Several other advertisements or additional detailed information can also be displayed along with the POI. US patent application 2007260393A teaches one such technology.

### Description of the invention

The core of the current invention is a method to display a Point-of-Interest (POI) to a user of a navigation device depending on an input from the user. The features of the independent claims of the current invention present the core of the current invention.

The method of the current invention comprises the steps of displaying the POI in a limited information state, receiving a input from the user depending on the limited information state of the POI, retrieving a detailed information state of the POI from a database depending on the input received from the user, displaying the detailed information state of the POI.

The limited information state of the POI is advantageously a basic information of the existence of the POI at a particular location as displayed in the navigation device. The limited information state does not display any other details related to the POI.

The input received from the user is an authorization for a payment towards viewing the detailed information state of the POI. According to the aspects of the current invention, the user pays for viewing the detailed information state of the POI. The detailed information state of the POI is additional advance information pertaining to the POI. The detailed information state of the POI is advantageously stored in the database, which is retrieved by the method of the current invention.

In another aspect of the current invention a navigation device to display the POI to the user is also disclosed. The Navigation device comprises, a display means to display the POI in a limited information state, a input means to receive an input from the user, a database to store a detailed information state corresponding to the POI and a data processing means to retrieve the detailed information state from the database and change the limited information state of the POI to the detailed information state in the display means depending on the input from the user.

### Short description of the drawings

Advantageous embodiments and refinements of the invention are evident from the dependent claims. An exemplifying embodiment of the invention is explained in principle below with reference to the drawings. The drawings are,
Figure 1 shows a block diagram of a navigation device and executing a method according to the aspects of the current invention.
Figure 2a and 2b show a Point-of-Interest (POI) displayed in the navigation device with a limited information state and a detailed information state respectively.
Figure 3 shows a flowchart of the method of the current invention.

### Description of the Embodiments

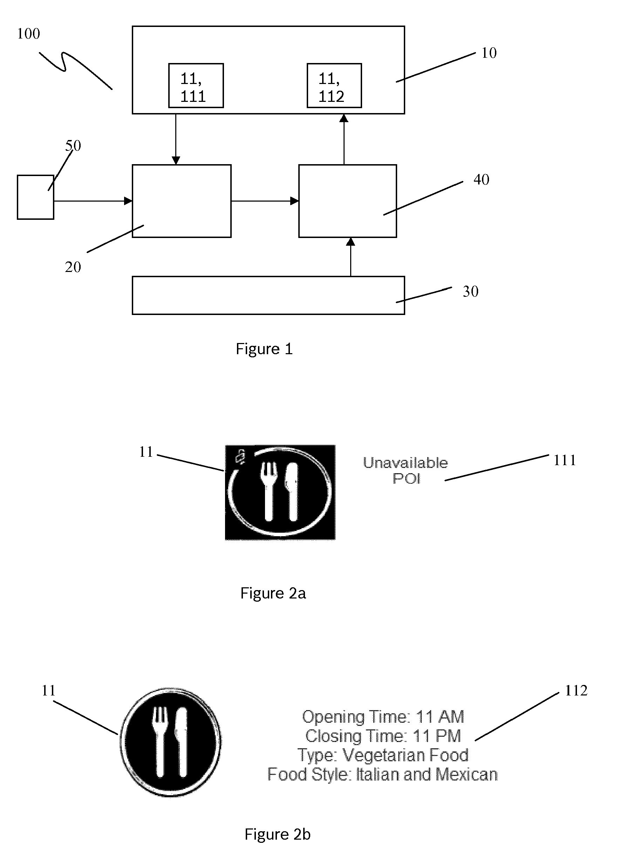

Figure 1 shows a block diagram representation of a navigation device 100 executing a method according to the aspects of the current invention. The navigation device 100 comprises a display means 10 to display a Point-of-Interest (POI) 11 and a corresponding limited information state 111 of the POI 11. An input means 20 receives an input from a user 50 of the navigation device 100 depending on the limited information state 111 of the POI 11. A database 30 stores a detailed information state 112 of the POI 11. A data processing means 40 retrieves the detailed information state 112 from the database 30 and changes the limited information state 111 of the POI 11 to the detailed information state 112 in the display means 10 depending on the input received from the user 50.

The navigation device 100 displays POI 11 as when a user 50 traverses through a path to a destination. The POI 11 which are near to a current location of the user 50 pop-up along the traverse path of the user 50. Some POIs 11 may not be displayed at all depending on the category of the POI 11, for example, McDonald restaurants or Shell Petrol bunks may not be displayed or be displayed in a limited information state 111.

According to the aspect of the current invention, the display means 10 of the navigation device 100 initially displays the POI 11 in a limited information state 111 as shown in figure 2a. The limited information state 111 contains basic information regarding the POI 11. Further, the POI 11 itself can be displayed in a locked state to suggest to the user 50, that not all details corresponding to the POI 11 are displayed. Simultaneously an intimation is provided to the user 50 through the input means 20 to unlock the POI 11. The input means 20 could be a button on the navigation device or a touch based input any other visual or audio means to receive the input from the user 50. The input from the user 50 can be a authorization to unlock the POI 11. The authorization could be a confirmation to a payment made by the user 50 or an authentication for a user ID - password combination etc. The input could also be a authentication of the user to a club membership or a privilege card.

As soon as the user 50 provides the necessary input to unlock the POI 11 to the input means 20, the data processing means 40 is triggered. The data processing means 40 interacts with the database 30 which can store or fetch detailed information state 112 of the POI 11. The database 30 could be a memory unit within the navigation device 100 or a unit interacting over internet or any other communication medium and retrieve the updated detailed information state 112 of the POI 11. The data processing means 40 then changes the limited information state 111 of the POI 11 that is being displayed to the detailed information state 112 of the POI 11 in the display means 10. The POI 11 and the detailed information state 112 are as shown in figure 2b that would be displayed in the display means 10.

Further the data processing means 40 can change the way the POI 11 itself is displayed in the display means 10. The locked symbol can be changed to an unlock symbol in the display means 10 by the data processing means 40. Thus the user 50 can view the detailed information of the POI 11 after the payment is made to view the detailed information of the POI 11. Also, a route to the POI 11 can also be displayed to the user 50 of the navigation device 100.

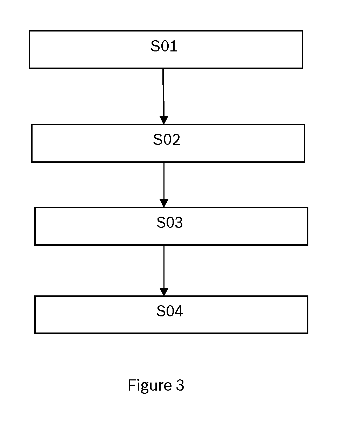

The method of the current invention can be stored in a memory unit of the navigation device 100 of the current invention and executed by a processing unit as soon as the navigation device 100 is turned ON. Figure 3 shows a flowchart to the method of the current invention. The method to display the POI 11 comprises the step of S01 for displaying the POI 11 in a limited information state 111. In S02 the input from the user 50 depending on the limited information state 111 of the POI 11 is received. In step S03 the detailed information state 112 of the POI 11 from the database 30 is retrieved depending on the input received from the user 50. In step S04 the detailed information state 112 of the POI 11 is displayed along with the POI 11.

It must be understood that the embodiments explained in the above detailed description is only illustrative and does not limit the scope of this invention. The scope of this invention is limited only by the scope of the claims. Many modification and changes in the embodiments aforementioned are envisaged and are within the scope of this invention.

## Claims

1. A method to display Point-of-Interest (POI) (11) to a user (50) in a navigation device (100), comprising the steps,
- Displaying (S01) said POI (11) in a limited information state (111),
- Receiving (S02) a input from said user (50) depending on said limited information state (111) of said POI (11),
- Retrieving (S03) a detailed information state (112) of said POI (11) from a database (30) depending on said input received from said user (50),
- Displaying (S04) said detailed information state (112) of said POI (11).

2. The method as claimed in claim 1, wherein said limited information state (111) is an indication corresponding to availability of said POI (11).

3. The method as claimed in claim 1, wherein said input from said user (50) is a authentication to retrieve said detailed information state (112) of said POI (11).

4. The method as claimed in claim 3, wherein said authentication is obtained by a payment by said user (50) to view said detailed information state (112).

5. The method as claimed in claim 1, wherein said detailed information state (112) is indication corresponding to at least one additional information of said POI (11).

6. The method as claimed in claim 5, wherein said at least one additional information of said POI (11) is at least one of a opening time or a closing time or a POI- type and the like.

7. The method as claimed in claim 1, wherein said database (30) is a memory within said navigation device (100) or is a internet based data storage.

8. The method as claimed in claim 1, wherein a route to said POI (11) is displayed to said user (50) depending on said detailed information state (112)

9. A Navigation device (100) to display a Point-of-Interest (POI) (11) to a user (50), comprising,
- A display means (10) to display said POI (11) in a limited information state (111),
- A input means (20) to receive an input from said user (50),
- A database (30) to store a detailed information state (112) corresponding to said POI (11),
- A data processing means (40) to retrieve said detailed information state (112) from said database (30) and change said limited information state (111) of said POI (11) to said detailed information state (112) in said display means (10) depending on said input from said user (50).
